# EUROPEAN PATENT SPECIFICATION

(11) **EP 2 791 556 B1**
(45) Date of publication and mention of the grant of the patent: **18.10.2017**
(21) Application number: 12809473.7
(22) Date of filing: 12.12.2012
(51) Int. Cl.: F16J 9/20, B23P 15/06

(54) **PISTON RING FORMED FROM RING BLANK**
AUS EINEM RINGZUSCHNITT GEFORMTER KOLBENRING
SEGMENT DE PISTON COMPOSÉ D'UN FLAN DE SEGMENT

(30) Priority: 14.12.2011 US 201161570616 P; 04.12.2012 US 201213693472
(43) Date of publication of application: 22.10.2014
(73) Proprietor: MAHLE International GmbH, 70376 Stuttgart (DE)
(72) Inventor: PICCARD, Robert, J., St. Johns, MI 48879 (US); ANDROS, Timothy, Fowler, MI 48835 (US); SYTSMA J. Steven, Muskegon, Michigan 49444 (US)
(74) Representative: BRP Renaud & Partner mbB Rechtsanwälte Patentanwälte Steuerberater
(86) International application number: PCT/US2012/069254
(87) International publication number: WO 2013/090436

(56) References cited:
- DE-A1-102004 021 361
- GB-A- 300 185
- US-A- 2 511 874
- US-A- 2 940 803

## Description

### CROSS-REFERENCE TO RELATED APPLICATIONS

This application claims the benefit of U.S. Provisional Application Serial No.61/570,616 filed on December 14, 2011 and U.S. Utility Application Serial No. 13/693,472 filed on December 4, 2012.

### TECHNICAL FIELD

The present disclosure relates generally to piston rings, and more specifically to a piston ring formed using a ring blank, e.g., a wire, having an improved cross-sectional shape.

### BACKGROUND

A piston reciprocates within a cylinder of an internal combustion engine and compresses fluids, such as gases, within a combustion chamber of the cylinder. These compressed fluids are then ignited to expand within the combustion chamber thereby forcing the piston away from the point of ignition and cycling the piston to its original position. Pistons typically include at least one groove for receiving a piston ring. The piston ring forms a seal with the wall of the cylinder to prevent gases from escaping from the combustion chamber.

There are traditionally two different types of piston rings, oil control rings and compression rings. Regarding compression rings, a piston assembly typically includes one or more compression rings to generate a seal between the outer surface of the piston and the wall of the cylinder. An inner peripheral face of the ring fits into the ring groove of the piston while a portion of an outer peripheral face of the compression ring contacts the wall of the cylinder. The outer peripheral face of the compression ring generates a seal in the gap between the piston and the cylinder wall to prevent high-pressure combustion gases and air from escaping the combustion chamber. Typically, two compression rings (commonly referred to as first and second piston rings) and one oil control ring will be provided in each piston. In addition to preventing gases from escaping the combustion chamber, the second piston ring also may perform an oil scraping function, which entails scraping oil from the cylinder wall on the downward stroke of the piston. The oil scraping function is important for reducing oil consumption by preventing oil from entering the combustion chamber and being burned off.

One known piston ring typically employed as a second piston ring is known as a Napier ring 10, an example of which is shown in FIG. 1. The Napier-style ring 10 includes a generally tapered outer peripheral face 11 and a lower surface 12 having a hook groove 13. The intersection between the hook groove 13 and the tapered outer peripheral face 11 define an edge 14 that contacts the wall 15 of the cylinder 16 when the ring 10 is positioned within a groove 17 of a piston 18.

Some second piston rings are generally provided as a metallic wire that is subsequently machined to a desired cross-section. The machining processes may include turning and grinding, which is a costly and time consuming step to providing the desired shape. The machining process also results in burrs and chips from turning or grinding of the material, which results in waste and fine particles that need to be cleaned from the wire prior to use, which is a problem. Known designs have attempted to alleviate these problems by using cast iron second rings, rather than steel from drawn/rolled wires, as cast iron is easier to machine and therefore results in less machining costs and fewer burrs. However, the use of steel wire in second rings is desirable because of its relative lightness and durability when compared to cast iron, and thus a means of reducing machining processes required for forming a steel wire second ring is desirable.

Additionally, previous designs incorporating the Napier-style profile for use in a steel wire second ring required multiple machining operations. The need for multiple grinding steps using a plurality of grinding surfaces results from the need for a generally sharp edge 14 that is required to increase the scrapping effect of the second ring. However, typically drawn/rolled wire cannot generally be formed with sufficiently sharp-edged profiles (generally, corners in profiles of drawn/rolled wire have a rounded shape with a minimum radius of 0.05 mm). Thus, multiple grinding operations to sharpen the edge 14 are required. More specifically, a first grinding operation must be applied to a bottom surface of the ring, and a second grinding operation must be applied to the outer diameter surface. The standard Napier hook includes an axial offset 19, which prevents the underside of the hook from being contacted with a single grinding surface, e.g., during a lower surface 12 grinding operation. Thus, at least a second grinding operation is typically required along the outside diameter (O.D.) surface in order to form the relatively sharp edge 14 (in addition to the necessary lower surface 12 grinding operation). Previous micro-Napier type designs similarly include an axial offset 19, which completely prevents any contact by the grinding surface during application to the lower surface to the outer edge 14.

Outside diameter (O.D.) taper grinding is generally costly and is not particularly cost effective for use with steel rings. Accordingly, there is a need for a ring blank design, e.g., using wire, that allows for flexibility by the wire manufacturer to achieve a near sharp condition on the edge 14 of a Napier-style second ring while eliminating the cost and need for additional machining, thereby providing a cost-effective high performance steel piston ring.

US 2 511 874 A shows a piston ring with a cross-sectional profile that includes an upper surface and a lower surface disposed between an inner peripheral face and an outer peripheral face. A tapered nose is formed at the bottom of the outer peripheral face while a groove is formed in the lower surface.

DE 10 2004 021 361 A1 discloses a piston ring with an upper surface, a lower surface and an outer peripheral face, wherein an edge is formed at the bottom of the outer peripheral face.

US 2 940 803 A describes a piston ring with an outer peripheral face with a lower part in which an edge is formed using a bevel.

GB 300 185 A describes a method for producing a piston ring, wherein a lower surface of the piston ring is grinded in order to remove a nose of the lower surface.

### BRIEF SUMMARY

Various exemplary illustrations of a piston ring, e.g., a second piston ring, and a method of making the same from a ring blank, e.g., a wire, are disclosed herein. One exemplary method may include providing a near net shape ring blank having a cross-sectional profile. The ring blank may generally comprise parallel upper and lower surfaces disposed between inner and outer peripheral faces, and a generally tapered nose area that is formed at the bottom of the outer peripheral face, wherein the nose area comprises a nose radius into which the outer peripheral face terminates. The ring blank further comprises a hook area adjoining the nose area, wherein the hook area defines a hook shaped groove in an outer portion of the lower surface. The method further comprises forming the near net shape ring blank into a ring shape, and grinding the lower surface and a lower portion of the nose area by a grinding surface that is generally planar, thereby truncating a lower portion of the nose area while grinding the lower surface of the ring.

While the claims are not limited to the illustrated examples, an appreciation of various aspects is best gained through a discussion of various examples thereof. The exemplary illustrations described herein are not intended to be exhaustive or otherwise limiting or restricting to the precise form and configuration shown in the drawings and disclosed in the following detailed description. Exemplary illustrations are described in detail by referring to the drawings as follows:
FIG. 1 illustrates a cross-sectional view of a known piston ring;
FIG. 2 illustrates a cross-sectional view of an exemplary piston ring blank, e.g., a wire, which may be utilized to form a piston ring;
FIG. 3 illustrates a portion of a cross-sectional view of an exemplary piston ring blank;
FIG. 4 illustrates a perspective view of an exemplary piston ring blank formed into a ring shape;
FIG. 5A illustrates a cross-sectional view of an exemplary piston ring blank after a grinding operation;
FIG. 5B illustrates a portion of a cross-sectional view of an exemplary piston ring blank after a side-grinding operation;
FIG. 6 illustrates a cross-sectional view of an embodiment of a piston ring blank;
FIG. 7 illustrates a cross-sectional view of a piston ring in a piston and a piston cylinder; and
FIG. 8 is a flow diagram of a method of manufacturing a second piston ring.

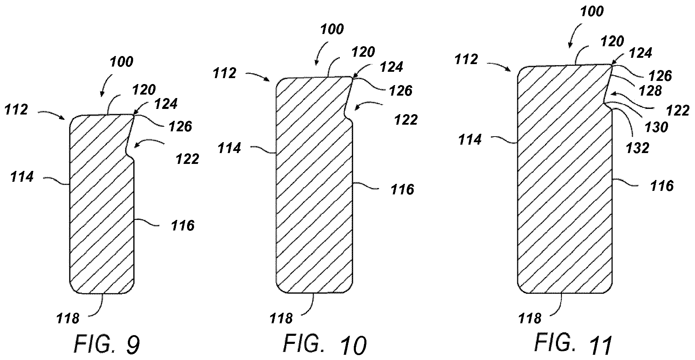

Figures 9, 10 and 11 do not form part of the application but show a related piston ring.

Please note that figures 1-8 are not attached thereto.

### DETAILED DESCRIPTION

Reference in the specification to "an exemplary illustration", an "example" or similar language means that a particular feature, structure, or characteristic described in connection with the exemplary approach is included in at least one illustration. The appearances of the phrase "in an illustration" or similar type language in various places in the specification are not necessarily all referring to the same illustration or example.

Turning to FIGS. 2-5, an exemplary illustration of a piston ring blank 20 is shown. As shown in FIG. 2, the piston ring blank is illustrated as a cross-sectional view of a blank, e.g., wire 20, having a cross sectional profile that includes an upper surface 24, a lower surface 22, an inner peripheral face 23 defining an inner diameter (ID) and an outer peripheral face 21 defining an outer diameter (OD). While the exemplary illustrations provided herein may be directed to ring blanks comprising a roll-formed wire, e.g., wire 20, other ring blanks may be employed, such as cast or forged ring blanks. Exemplary ring blanks 20 may thus be formed in any manner that is convenient, e.g., rolling, forging, or casting, merely as examples. The upper and lower surfaces 24, 22 are generally parallel and disposed between the inner and outer peripheral faces 23, 21. While the upper and lower surfaces 24, 22 are shown parallel, the surfaces 24, 22 may not be exactly parallel and, moreover, in some examples the upper and lower surfaces 24, 22 may be slightly non-parallel in order to allow for deformation of the wire 20 after the wire 20 is formed into an annular piston ring. More specifically, the upper and lower surfaces 24, 22 of the wire 20 may initially be non-parallel, but as a result of forming the wire 20 into an annular shape, the surfaces 24, 22 are made parallel or at least more parallel than prior to forming the wire 20 into an annular shape.

As shown in FIGS. 2 and 3, the lower surface 22 includes at the outer edge a hook area 27, which includes a nose radius area 25 having a relatively sharp radius 26 configured as a scraper edge for improved oil control characteristics. The outer peripheral face 21 may be generally tapered and extends outwardly from the upper surface 24 to the nose radius area 25. In one example, the outer peripheral face 21 is tapered at an angle ϕ of approximately 2 degrees from a line perpendicular to the upper and lower surfaces 22 and 24, as shown in FIG. 3. In one exemplary illustration, the taper angle ϕ is formed by in the wire forming process. Accordingly, a grinding operation is not needed in such examples to form the taper angle ϕ of the outer peripheral face 21. The piston ring wire 20 may be formed into a ring shape as shown in FIG. 4 through any known process for use in a common engine/piston application, with the nose area 25 positioned radially outwardly. The piston ring wire 20 may be constructed of a resilient metallic material, such as steel (e.g., 9254 CrSi Steel).

Unlike the conventional Napier-style piston ring described above, in one exemplary illustration the piston ring wire 20 may be formed from a wire with a "near-net" shape (i.e., an initial wire shape after being drawn/rolled and prior to further machining such as turning or grinding) having as near of a sharp condition on the nose radius 26 as possible, e.g., as shown in FIG. 3. In one exemplary illustration, a typical grinding operation on a near-net shape ring may remove approximately 0.035 millimeters (mm) of material from a near-net shaped ring blank or wire 20. An outer edge of the piston ring wire 20 may be subsequently machined to further enhance the sharpness of the outer edge, as will be described further below. For example, in one exemplary illustration, an outer edge of the piston ring wire may be machined to remove a radially outermost layer of material, e.g., approximately 0.004 millimeters (mm).

Any base ring blank or wire convenient may be used as piston ring blank, e.g., wire 20. Exemplary base wire may include a 1.54 millimeter (mm) wire, a 1.24 mm wire and a 1.04 mm wire, merely as examples. Moreover, these three exemplary dimensions are merely subsets of the total selection within each width family. Multiple radial thicknesses may be provided to correspond to a desired tension and/or diameter of a particular application.

Merely by way of example, as seen in FIG. 2 the piston ring wire 20 defining an initial "near-net" shape may have a nose radius 26 with a maximum radius R₁ of approximately 0.05 mm. Furthermore, unlike the conventional Napier-style piston ring, the nose area 25 of the piston ring wire 20 does not have an axial offset from the lower surface 22, allowing a single grinding surface 50 (see FIGS. 5A and 5B) to simultaneously contact both the lower surface 12, including at least a planar portion thereof, and the nose radius 26. In one exemplary illustration, the nose area 25 defines a lowermost axial position, i.e., with respect to the piston ring, that is substantially equal to an axial position of the lower surface 22. The nose area 25 of the piston ring wire 20 may include a very slight axial offset (not shown) up or down relative to the lower surface 22, so long as the nose area 25 can still be ground by the same grinding operation applied to the lower surface 22 with a generally planar grinding surface without having to remove excessive amounts of material from the lower surface 22 or nose area 25. In other words, any offset is sufficiently small that a standard side grinding operation employing a generally planar grinding surface will grind both the lower surface 22 and the nose area 25.

As illustrated in FIG. 3, the hook area 27 of the piston ring wire 20 may include an under cut angle 31 at an angle α from an imaginary line tangent to the lower surface 22. The angle α may be set, for example, to 15 degrees. Alternatively, the angle α may be set similarly to a standard Napier and micro-Napier grey cast iron ring's under cut angle. However, unlike the standard Napier and micro-Napier, the under cut angle 31 may extend from the nose radius 26 radially inwardly terminating into a fillet 32. The fillet 32 may extend generally downwardly toward the lower surface 22 and in a radially inward direction. In one exemplary illustration, the fillet 32 may have a radius R₂ of approximately 0.050 mm to 0.150 mm. The fillet 32 may extend at a predetermined angle, terminating into a back cut radius 33. The back cut radius 33 extends generally downwardly and inwardly toward the lower surface 22, and then terminates into the lower surface 22. In one exemplary illustration, the curved back cut radius 32 may have a radius R₃ of approximately 0.050 mm to 0.150 mm. In one exemplary illustration, the hook area 27, including the under cut angle 31, fillet 32, and back cut radius 33 may be formed in a near-net shaped wire, as will be further described below.

The hook area 27 provides an accumulator volume that increases the effectiveness of the oil scraping effect by providing a space or volume into which the scraped oil may flow, thereby lowering the pressure in the volume below the second ring and reducing the amount of oil that leaks into the volume above the second ring.

As noted above, the wire 20 may include no axial offset of the nose area 25, or alternatively may include a very slight predetermined axial offset at the nose area 25, which is sufficiently small to allow the lower portion of the nose radius 26 and the lower surface 22 to be contacted simultaneously when a generally planar grinding surface, e.g., side grinder 50, removes material during a lower surface 22 grinding operation. A grinding operation of the lower surface 22 may occur generally simultaneously as a grinding operation of the upper surface 24. For example, as shown in FIG. 5A a second side grinder 51 may be provided for grinding the upper surface 24 while the lower surface 22 is ground by the side grinder 50.

FIG. 5A illustrates an example of the wire 20 after the aforementioned side grinding operation has been performed, with the dashed lines indicating material that has been removed from the upper and lower surfaces 24, 22 by the side grinding operation. As illustrated in FIG. 5B, the axial location of the nose radius 26 allows the lower side 22 grind operation to contact the nose radius 26 as the side grinder 50 contacts at least a planar portion of the lower surface 22, thereby creating the truncated portion 40 at the bottom side of the nose 26 while the lower surface 22 is being ground. The truncated portion 40 sharpens the nose area 26, thereby approximating the sharp edge 14 of the conventional Napier-style ring and achieving the desired scraping effect without the use of an additional taper grind applied to the outer surface 21. As noted above, the outside diameter (O.D.) turn or taper grind operation is a relatively expensive and time consuming operation, and thus the elimination of this additional grinding operation results in a much more cost-effective piston ring. In FIGS. 5A and 5B, the amount of material illustrated as being removed by the side grinding operation is exaggerated in order to increase visibility in the drawing. In practice, the actual grinding depth *n₁* and/or *n₂* may be smaller than illustrated. In one exemplary illustration, each of the grinding depths *n₁* and/or *n₂are* approximately 0.035 millimeters (mm). In another example, a total axial height of approximately 0.07 millimeters is ground off of the upper and lower surfaces 24, 22, with the axial height removed from each of the upper and lower surfaces 24, 22 being approximately equal. In yet another example, a near-net shaped wire defines an axial height of approximately 1.24-1.26 millimeters (mm), and the upper and lower surfaces 24, 22 are ground such that a finished ring resulting from the near-net shaped wire defines an axial thickness of approximately 1.17-1.19 millimeters (mm).

An additional machining process may include lapping the outer peripheral face 21 of the piston ring wire 20. For example, the outer peripheral face 21 may be lapped in a barrel (not shown) to provide a 360° contact with engine bore surfaces about a circumference of the piston ring formed from the piston ring wire 20 after it has been formed into a circular shape. A lapping operation may also further minimize the radius R₁ on the nose 26, further sharpening a nose edge.

The ring 20 may also undergo application of a wear-resistant layer, e.g., in a chrome plating operation. For example, chrome plating may be deposited on the outer peripheral face 21. A wear-resistant layer such as a chrome plating or a physical vapor deposition coating, merely as examples, generally reduces scuffing and improves wear resistance of the ring 20.

In one exemplary method of applying a wear resistant layer, e.g., a chrome plating layer, multiple piston rings formed from piston ring wire 20, i.e., after the piston ring wire 20 is formed into a generally circular piston ring shape, may be stacked to facilitate application of the wear resistant layer to multiple rings at once. However, a problem arises in applying, for example, a chrome plate layer to multiple rings 20 at once, in that the chrome tends to bridge between adjacent rings stacked for plating. This is particularly problematic because the elimination of the axial offset 19 causes the outer peripheral faces 21 of adjacent stacked rings 20 to be very close to each other. Accordingly, to overcome this problem a chamfer 60 may be included in the cross-sectional profile of the wire piston ring 20 between the top surface 24 and the outer peripheral face 21, as shown in FIG. 6. The chamfer 60 provides a gap between the outer peripheral faces 21 of stacked rings 20, allowing the wear resistant layer, e.g., chrome plating, to starve off between adjacent rings, thereby avoiding bridging. Any chamfer or tapering of the transition between the top surface 24 and the outer peripheral face 21 may be employed that is convenient.

The ring 20 may also include an inner diameter bevel 61 between the inner peripheral face 23 and the lower surface 22, as shown in FIG. 6. While FIG. 6 shows both the chamfer 60 and the bevel 61 included in the piston ring wire 20, either feature may be included in the ring 20 independently of the other. The inner diameter bevel 61 may generally allow the ring 20 to achieve a desired level of twist in the wire when it is formed into a ring shape. Ring twist comprises portions of the ring 20 (for example, portions on the outer side of the ring) being distorted axially upward relative to other portions of the ring 20 when the ring 20 is formed into an annular/ring shape from a generally straight ring blank, e.g., a wire. For example, portions on the inner side of the ring may exhibit ring twist, as illustrated in FIG. 7, which shows a cross section of a piston ring 20 with a ring twist that has been inserted into a groove 17 of a piston 18. Ring twist can be desirable because it helps to seal the groove 17 into which the piston ring 20 fits somewhat loosely by causing portions of the ring (for example, 71, 72, and 73 in FIG. 7) to contact the sides of the groove 17. This sealing helps prevent oil migration from the volume below the second ring into the volume above the second ring.

Turning now to FIG. 8, a flow diagram illustrating an exemplary method 800 of producing a piston ring 20 is illustrated. In block S1, a drawn or rolled metal wire (e.g., steel) having a cross sectional profile, e.g., as described above, is provided.

Proceeding to block S2, the wire is formed into a ring shape with the nose area 25 positioned radially outwardly as shown in FIG. 4 through any known process for use in a common engine/piston application In one exemplary illustration a round coil process may be employed with a heat shaping step, to form a wire having a generally continuous radius of curvature. In another example, a cam coil process may be employed to provide a varying radius of curvature. Process 800 may then proceed to block S3.

At block S3, a grinding operation is performed, in which a lower portion of the nose area 25 of the ring 20 and the lower surface 22 of the ring 20 are simultaneously ground, thereby created a truncated portion 40 in the nose area 25. More specifically, as noted above a generally planar single grinding surface 50 may be employed to grind both the nose area 25 and at least a planar portion of the lower surface 22 at the same time.

Proceeding to block S4, a wear resistant layer may be applied to the outer peripheral face 21 of the ring 20, e.g., a chrome plating or physical vapor deposition coating. If block S4 is included, it may be advantageous to employ a cross sectional profile having a chamfer 60 to prevent bridging of adjacent outer surfaces 21 and/or rings 20. Process 800 may then proceed to block S5.

At block S5, a lapping operation may be performed. For example, as described above, a lapping process may be applied to an outer peripheral face 21 of the ring 21, thereby further sharpening the nose area 25.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claimed invention.

Accordingly, it is to be understood that the above description is intended to be illustrative and not restrictive. Many embodiments and applications other than the examples provided would be upon reading the above description. The scope of the invention should be determined, not with reference to the above description, but should instead be determined with reference to the appended claims, along with the full scope of equivalents to which such claims are entitled. It is anticipated and intended that future developments will occur in the arts discussed herein, and that the disclosed systems and methods will be incorporated into such future embodiments. In sum, it should be understood that the invention is capable of modification and variation and is limited only by the following claims.

All terms used in the claims are intended to be given their broadest reasonable constructions and their ordinary meanings as understood by those skilled in the art unless an explicit indication to the contrary in made herein. In particular, use of the singular articles such as "a," "the," "said," etc. should be read to recite one or more of the indicated elements unless a claim recites an explicit limitation to the contrary.

## Claims

1. A method of constructing a piston ring, comprising:
providing a ring blank having a cross-sectional profile that includes:
generally parallel upper and lower surfaces disposed between inner and outer peripheral faces;
a generally tapered nose area that is formed at the bottom of the outer peripheral face, wherein the nose area comprises a nose radius into which the outer peripheral face terminates; and
a hook area adjoining the nose area, wherein the hook area defines a hook shaped groove in an outer portion of the lower surface;
**characterized in:**
**that** the nose area comprises a nose radius into which the outer peripheral face terminates;
forming the ring blank into a ring shape; and
grinding the lower surface and a lower portion of the nose area generally simultaneously with a generally planar grinding surface, thereby truncating a lower portion of the nose area while grinding at least a planar portion of the lower surface.

2. The method of claim 1, further comprising lapping the outer peripheral face.

3. The method of claim 1, wherein the cross-sectional profile includes a chamfer into which the upper surface and the outer peripheral face terminate.

4. The method of claim 1, wherein the cross-sectional profile includes a bevel into which one of the upper and lower surfaces and the inner peripheral face terminate.

5. The method of claim 1, further comprising the step of applying a chrome plating to the outer peripheral face.

6. The method of claim 1, wherein the cross-sectional profile of the ring blank is such that a lowest portion of the nose area is located so as to be substantially flush to a tangent to the lower surface.

7. The method of claim 1, wherein the ring blank includes a steel material.

8. The method of claim 1, wherein the nose radius defines a maximum near net shape radius in the ring blank, wherein the maximum near net shape radius is no greater than approximately 0.06 millimeters.

9. The method of claim 1, wherein the hook area includes an under cut angle that extends from the nose radius upwardly and inwardly, a fillet into which the under cut angle terminates, and a back cut radius into which the fillet terminates, the back cut radius terminating into the lower surface.

10. The method of claim 9, wherein the back cut radius defines a near net shape radius in the ring blank of approximately 0.05 mm to 0.15 mm.

11. The method of claim 10, wherein the under cut angle extends at an angle of approximately 15° from an imaginary line parallel to the lower surface.

12. The method of claim 1, wherein the nose area defines a lowermost axial position that is substantially equal to an axial position of the lower surface.

13. The method of claim 1, further comprising establishing the ring blank as a wire.

14. A piston ring, comprising:
a ring blank formed into a generally annular shape, wherein the ring blank has a cross-sectional profile including:
generally parallel upper and lower surfaces disposed between inner and outer peripheral faces;
a generally tapered nose area that is formed at the bottom of the outer peripheral face, and
a hook area adjoining the nose area, wherein the hook area defines a hook shaped groove in an outer portion of the lower surface
**characterized in:**
**that** the nose area comprises a nose radius into which the outer peripheral face terminates;
**that** a lowest portion of the nose area is located so as to be substantially flush to an imaginary line tangent to the lower surface;
**that** a lower portion of the nose area includes a truncated portion defining a planar surface extending substantially parallel to the lower surface.

15. The piston ring of claim 14, wherein the outer peripheral face includes one of a chrome plate layer and a physical vapor deposition layer.

16. The piston ring of claim 14, wherein the nose radius defines a maximum near net shape radius, wherein the maximum near net shape radius is no greater than approximately 0.06 millimeters.

17. The piston ring of claim 14, wherein the ring blank include a steel material.

18. The piston ring of claim 14, wherein the hook area comprises an under cut angle that extends from the nose radius upwardly and inwardly, a fillet into which the under cut angle terminates, and a back cut radius into which the fillet terminates, the back cut radius terminating into the lower surface .

19. The piston ring of claim 14, wherein the nose area defines a lowermost axial position that is substantially equal to an axial position of the lower surface.

20. The piston ring of claim 14, wherein the ring blank is a wire.

## Patentansprüche

1. Verfahren zur Konstruktion eines Kolbenrings, umfassend:
Bereitstellen eines Ringrohlings mit einem Querschnittsprofil, welches beinhaltet:
eine generell parallele Ober- und Unterseite, die zwischen einer Innenumfangsfläche und einer Außenumfangsfläche angeordnet sind;
einen generell verjüngten Nasenbereich, der am Boden der Außenumfangsfläche gebildet ist, wobei der Nasenbereich einen Nasenradius umfasst, in welchen die Außenumfangsfläche mündet; und
einen Hakenbereich, der an den Nasenbereich angrenzt, wobei der Hakenbereich eine hakenförmige Nut in einem Außenteil der Unterseite definiert;
**dadurch gekennzeichnet,**
**dass** der Nasenbereich einen Nasenradius umfasst, in welchen die
Außenumfangsfläche mündet;
Formen des Ringrohlings zu einer Ringform; und
Schleifen der Unterseite und eines unteren Teils des Nasenbereichs generell gleichzeitig mit einer generell planaren Schleiffläche, wodurch ein unterer Teil des Nasenbereichs abgestumpft wird, während mindestens ein planarer Teil der Unterseite geschliffen wird.

2. Verfahren nach Anspruch 1, weiter das Läppen der Außenumfangsfläche umfassend.

3. Verfahren nach Anspruch 1, wobei das Querschnittsprofil eine Fase beinhaltet, in welche die Oberseite und die Außenumfangsfläche münden.

4. Verfahren nach Anspruch 1, wobei das Querschnittsprofil eine Abschrägung beinhaltet, in welche eine der Ober- und der Unterseite und die Innenumfangsfläche münden.

5. Verfahren nach Anspruch 1, weiter den Schritt des Anbringens einer Chromplattierung an der Außenumfangsfläche umfassend.

6. Verfahren nach Anspruch 1, wobei das Querschnittsprofil des Ringrohlings derart ist, dass ein unterster Teil des Nasenbereichs so angeordnet ist, dass er im Wesentlichen bündig mit einer Tangente zu der Unterseite ist.

7. Verfahren nach Anspruch 1, wobei der Ringrohling ein Stahlmaterial beinhaltet.

8. Verfahren nach Anspruch 1, wobei der Nasenradius einen maximal endabmessungsnahen Radius in dem Ringrohling definiert, wobei der maximal endabmessungsnahe Radius nicht größer als ungefähr 0,06 Millimeter ist.

9. Verfahren nach Anspruch 1, wobei der Hakenbereich einen Unterschneidungswinkel beinhaltet, der sich von dem Nasenradius aufwärts und einwärts erstreckt, eine Abrundung, in welche der Unterschneidungswinkel mündet, und einen Hinterschneidungsradius, in welchen die Abrundung mündet, wobei der Hinterschneidungsradius in die Unterseite mündet.

10. Verfahren nach Anspruch 9, wobei der Hinterschneidungsradius einen endabmessungsnahen Radius in dem Ringrohling von ungefähr 0,05 mm bis 0,15 mm definiert.

11. Verfahren nach Anspruch 10, wobei sich der Unterschneidungswinkel über einen Winkel von ungefähr 15° von einer imaginären Linie parallel zur Unterseite erstreckt.

12. Verfahren nach Anspruch 1, wobei der Nasenbereich eine unterste axiale Position definiert, die im Wesentlichen gleich einer axialen Position der Unterseite ist.

13. Verfahren nach Anspruch 1, weiter die Herstellung des Ringrohlings als Draht umfassend.

14. Kolbenring, umfassend:
einen Ringrohling, der zu einer generell ringförmigen Form geformt ist, wobei der Ringrohling ein Querschnittsprofil aufweist, das beinhaltet:
eine generell parallele Ober- und Unterseite, die zwischen einer Innenumfangsfläche und einer Außenumfangsfläche angeordnet sind;
einen generell verjüngten Nasenbereich, der am Boden der Außenumfangsfläche gebildet ist, und
einen Hakenbereich, der an den Nasenbereich angrenzt, wobei der Hakenbereich eine hakenförmige Nut in einem Außenteil der Unterseite definiert;
**dadurch gekennzeichnet,**
**dass** der Nasenbereich einen Nasenradius umfasst, in welchen die Außenumfangsfläche mündet;
**dass** ein unterster Teil des Nasenbereichs so angeordnet ist, dass er im Wesentlichen bündig mit einer imaginären Linie ist, die Tangente zu der Unterseite ist;
**dass** ein unterer Teil des Nasenbereichs einen abgestumpften Teil beinhaltet, der eine planare Fläche definiert, die sich im Wesentlichen parallel zu der Unterseite erstreckt.

15. Kolbenring nach Anspruch 14, wobei die Außenumfangsfläche eines einer Chromplattierungsschicht und einer physikalischen Dampfabscheidungsschicht beinhaltet.

16. Kolbenring nach Anspruch 14, wobei der Nasenradius einen maximalen endabmessungsnahen Radius definiert, wobei der maximale endabmessungsnahe Radius nicht größer als ungefähr 0,06 Millimeter ist.

17. Kolbenring nach Anspruch 14, wobei der Ringrohling ein Stahlmaterial beinhaltet.

18. Kolbenring nach Anspruch 14, wobei der Hakenbereich einen Unterschneidungswinkel umfasst, der sich von dem Nasenradius aufwärts und einwärts erstreckt, eine Abrundung, in welche der Unterschneidungswinkel mündet, und einen Hinterschneidungsradius, in welchen die Abrundung mündet, wobei der Hinterschneidungsradius in die Unterseite mündet.

19. Kolbenring nach Anspruch 14, wobei der Nasenbereich eine unterste axiale Position definiert, die im Wesentlichen gleich einer axialen Position der Unterseite ist.

20. Kolbenring nach Anspruch 14, wobei der Ringrohling ein Draht ist.

## Revendications

1. Procédé de construction d'un segment de piston, comprenant :
la fourniture d'un flan de segment présentant un profil de section transversale qui inclut :
des surfaces supérieure et inférieure généralement parallèles disposées entre des faces périphériques intérieure et extérieure ;
une zone de nez généralement effilée qui est formée au niveau de la partie inférieure de la face périphérique extérieure, dans lequel la zone de nez comprend un rayon de nez dans lequel se termine la face périphérique extérieure ; et
une zone de crochet attenante à la zone de nez, dans lequel la zone de crochet définit une rainure en forme de crochet dans une partie extérieure de la surface inférieure ;
**caractérisé :**
**en ce que** la zone de nez comprend un rayon de nez dans lequel se termine la face périphérique extérieure ;
par la formation du flan de segment en une forme de segment ; et
par le meulage de la surface inférieure et d'une partie inférieure de la zone de nez de manière généralement simultanée avec une surface de meulage généralement planaire, en tronquant de ce fait une partie inférieure de la zone de nez tout en meulant au moins une partie planaire de la surface inférieure.

2. Procédé selon la revendication 1, comprenant en outre le rodage de la face périphérique extérieure.

3. Procédé selon la revendication 1, dans lequel le profil de section transversale inclut un chanfrein dans lequel se terminent la surface supérieure et la face périphérique extérieure.

4. Procédé selon la revendication 1, dans lequel le profil de section transversale inclut un biseau dans lequel se terminent l'une des surfaces supérieure et inférieure et la face périphérique intérieure.

5. Procédé selon la revendication 1, comprenant en outre l'étape d'application d'un placage de chrome sur la face périphérique extérieure.

6. Procédé selon la revendication 1, dans lequel le profil de section transversale du flan de segment est tel qu'une partie la plus basse de la zone de nez se situe de manière à être sensiblement au même niveau qu'une tangente à la surface inférieure.

7. Procédé selon la revendication 1, dans lequel le flan de segment inclut un matériau d'acier.

8. Procédé selon la revendication 1, dans lequel le rayon de nez définit un rayon de forme quasi-nette maximum dans le flan de segment, dans lequel le rayon de forme quasi-nette maximum ne dépasse pas approximativement 0,06 millimètre.

9. Procédé selon la revendication 1, dans lequel la zone de crochet inclut un angle de contre-dépouille qui s'étend depuis le rayon de nez vers le haut et vers l'intérieur, un congé dans lequel se termine l'angle de contre-dépouille, et un rayon de coupe arrière dans lequel se termine le congé, le rayon de coupe arrière se terminant dans la surface inférieure.

10. Procédé selon la revendication 9, dans lequel le rayon de coupe arrière définit un rayon de forme quasi-nette dans le flan de segment d'approximativement 0,05 mm à 0,15 mm.

11. Procédé selon la revendication 10, dans lequel l'angle de contre-dépouille s'étend selon un angle d'approximativement 15° depuis une ligne imaginaire parallèle à la surface inférieure.

12. Procédé selon la revendication 1, dans lequel la zone de nez définit une position axiale la plus basse qui est sensiblement égale à une position axiale de la surface inférieure.

13. Procédé selon la revendication 1, comprenant en outre l'établissement du flan de segment en tant que fil.

14. Segment de piston, comprenant :
un flan de segment formé selon une forme généralement annulaire, dans lequel le flan de segment présente un profil de section transversale incluant :
des surfaces supérieure et inférieure généralement parallèles disposées entre des faces périphériques intérieure et extérieure ;
une zone de nez généralement effilée qui est formée au niveau de la partie inférieure de la face périphérique extérieure, et
une zone de crochet attenante à la zone de nez, dans lequel la zone de crochet définit une rainure en forme de crochet dans une partie extérieure de la surface inférieure
**caractérisé en ce :**
**que** la zone de nez comprend un rayon de nez dans lequel se termine la face périphérique extérieure ;
**qu'**une partie la plus basse de la zone de nez se situe de manière à être sensiblement au même niveau qu'une ligne imaginaire tangente à la surface inférieure ;
**qu'**une partie inférieure de la zone de nez inclut une partie tronquée définissant une surface planaire s'étendant de manière sensiblement parallèle à la surface inférieure.

15. Segment de piston selon la revendication 14, dans lequel la face périphérique extérieure inclut l'une parmi une couche de placage de chrome et une couche de dépôt physique en phase vapeur.

16. Segment de piston selon la revendication 14, dans lequel le rayon de nez définit un rayon de forme quasi-nette maximum, dans lequel le rayon de forme quasi-nette maximum ne dépasse pas approximativement 0,06 millimètre.

17. Segment de piston selon la revendication 14, dans lequel le flan de segment inclut un matériau d'acier.

18. Segment de piston selon la revendication 14, dans lequel la zone de crochet comprend un angle de contre-dépouille qui s'étend depuis le rayon de nez vers le haut et vers l'intérieur, un congé dans lequel se termine l'angle de contre-dépouille, et un rayon de coupe arrière dans lequel se termine le congé, le rayon de coupe arrière se terminant dans la surface inférieure.

19. Segment de piston selon la revendication 14, dans lequel la zone de nez définit une position axiale la plus basse qui est sensiblement égale à une position axiale de la surface inférieure.

20. Segment de piston selon la revendication 14, dans lequel le flan de segment est un fil.
